# EUROPEAN PATENT SPECIFICATION

(11) **EP 0 447 052 B1**
(45) Date of publication and mention of the grant of the patent: **31.08.1994**
(21) Application number: 91301492.4
(22) Date of filing: 25.02.1991
(51) Int. Cl.: G01N 25/62

(54) **Method and apparatus for the measurement of wet and dry bulb temperatures and water content of gas streams**
Verfahren und Vorrichtung zur Messung von Feucht- und Trockenkugeltemperaturen und Wassergehalt von Gasströmen
Méthode et appareil pour le mesure de températures à boule humide et sèche et teneur en eau de courants de gaz

(30) Priority: 09.03.1990 US 491139
(43) Date of publication of application: 18.09.1991
(73) Proprietor: THE BABCOCK & WILCOX COMPANY, New Orleans, Louisiana 70160 (US)
(72) Inventor: Amrhein, Gerald Thomas, Louisville, Ohio 44641 (US); Nolan, Paul Stephen, North Canton, Ohio 44720 (US)
(74) Representative: Pilch, Adam John Michael

(56) References cited:
- DE-A- 2 219 075
- GB-A- 1 275 999
- US-A- 4 222 261
- US-A- 4 559 823
- US-A- 4 625 550
- US-A- 4 887 466

## Description

This invention relates to measurement of wet and dry bulb temperatures and water content of gas streams, and in particular but not exclusively, is directed to measuring the humidity of a gas stream from a fossil fuel combustion process containing fly ash and other particulate matter.

A psychrometer is a device for measuring the water content of air by simultaneously measuring the wet and dry bulb temperatures. These values are used with a psychrometric chart to determine relative humidity.

There are numerous known forms of psychrometer such as are disclosed in US patent nos US-A-4 175 436, 4 461 167, 4 222 261, 4 559 823, 4 625 550 and 4 409 834. There are also several commercial devices currently available for measuring the wet and dry bulb temperatures of air. One such commercial device is the Assman psychrometer. This device uses a small blower to draw air across a pair of matched thermocouples of which one is wrapped with a saturated wick.

In the standard sling psychrometer, there are two thermometers, one for the wet bulb measurement and one for the dry bulb measurement. The wet bulb thermometer is wrapped with a porous material or wick and soaked in water. When it is whirled in air, evaporation from the wick causes the wet bulb thermometer to cool. At a steady state, the temperature with the wet bulb thermometer is known as a wet bulb temperature. For air/water systems, the wet bulb temperature is equal to the adiabatic saturation temperature. For combustion gases, these parameters differ by a few degrees.

While the foregoing devices function well for air/water systems, they are not suitable for a gas stream from a fossil fuel combustion process such as a coal combustion process. The flue gas contains fly ash and other particulates which would deposit on and contaminate the wetted wick causing incorrect measurements.

It is important to control and monitor flue gas humidity closely in view of the recent interest in clean coal technology. Most of the present emission control technologies incorporate dry scrubbing or in-duct injection of an alkali-based sorbent followed by flue gas humidification. Humidification increases overall sulphur oxide removal and further enhances particulate removal with an electrostatic precipitator. Consequently, it is necessary to operate a humidifier at a very low approach to adiabatic saturation temperature (Tₐₛ). As a result, the likelihood of system failure increases from incomplete evaporation within the duct.

In order to avoid this type of failure, it is necessary for the amount of fluid injection to be closely controlled and monitored. Fluid injection is controllable by a measurement of the degree of humidification of the treated gas. The instruments presently available for monitoring humidity of a flue gas employ expensive, sensitive optical and electronic sensors. These instruments are complicated and require periodic maintenance and calibration by skilled technicians.

Thus there is a need for an inexpensive, simple and low maintenance device for measuring the humidity of a gas stream such as a dusty flue gas stream. The device needs to be constructed of materials that can withstand temperatures up to about 200°C (400°F) and should not be sensitive to vibrations, weather or corrosion. The device needs to make measurements which are primary measurements so as not to require calibration. The device should preferably be constructed of readily available and inexpensive commercial equipment so as to facilitate repairs and construction.

According to one aspect of the invention there is provided apparatus for measuring the wet and dry bulb temperatures of a gas stream flowing in a duct, the apparatus comprising:
a first sensor for measuring the dry bulb temperature of the gas stream;
a second sensor for measuring the wet blub temperature of the gas stream;
a wick surrounding the second sensor with the wick being arranged to absorb an evaporative coolant fluid for the second sensor;
means for supplying the evaporative coolant fluid to the wick;
means for regulating the amount of evaporative coolant fluid in the supplying means;
characterised in that:
a sample sheath extends into the gas duct, the sample sheath having a filter at one end within the gas duct, the first and second sensors and the wick being located within the sample sheath;
means is provided for drawing the gas into the sample sheath;
the supplying means includes a reservoir within the sample sheath, the reservoir being connected to a fluid supply line; and
the regulating means includes a level switch for activating a valve on the evaporative coolant fluid supply line.

According to another aspect of the invention there is provided a method of measuring the wet and dry bulb temperatures of a gas stream in a gas duct, the method comprising the steps of:
providing first and second sensors for measuring the dry and wet bulb temperatures respectively;
surrounding the second sensor with a wick operable to absorb an evaporative coolant fluid;
supplying evaporative coolant fluid to the wick; and
regulating the amount of the evaporative coolant fluid supplied to the wick;
characterised by the steps of:
situating a sample sheath in the gas duct with the sample sheath having a filter inside the gas duct, the first and second sensors and the wick being located within the sample sheath; and
drawing the gas into the sample sheath through the filter thereby sampling the gas stream;
wherein the evaporative coolant fluid is supplied to the wick from a reservoir within the sample sheath which reservoir is connected to a flow regulated fluid supply line, and wherein the regulating is carried out by a level switch which activates a valve on the evaporative coolant supply line.

In a preferred embodiment of the invention, described more fully below, wet and dry bulb temperatures of a gas stream flowing in a duct are measured by the use of a sample sheath which extends into the duct with a filter at the duct end of the sample sheath. First and second thermocouples within the sample sheath measure the dry and wet bulb temperatures of the sample gas, the second thermocouple being surrounded by a wick for this purpose. The wick absorbs cooling water from a reservoir which is maintained at a desired level by a level switch and controlled valve. A blower draws gas from the duct into the sample sheath.

The water content of the gas can be derived from the measured wet and dry bulb temperatures, and the water content measurement can be used in flue gas decontamination.

In the preferred embodiment, the sample sheath has a self-cleaning filter for separating the particulate matter from the sampled flue gas.

The preferred embodiment is capable of measuring accurately the humidity of a flue gas stream containing fly ash and particulate matter.

According to the preferred embodiment of the invention, there is provided an inexpensive, simple, and low maintenance device capable of withstanding temperatures up to about 200°C (400°F) and which is not sensitive to vibrations, weather or corrosion.

The invention will now be further described, by way of illustrative and non-limiting example, with reference to the accompanying single-figure drawing which shows a schematic sectional illustration of an embodiment of the present invention in position in a flue gas duct.

Referring to the single-figure drawing, the flue gas emitted from a fossil fuel combustion process flows in a direction indicated by arrows in a flue gas duct 10, only one side of which is shown. Situated in the duct 10 is a sample sheath 12 which extends into the duct 10. It is preferred for the sample sheath 12 to be cylindrical and constructed of stainless steel such as in the form of a pipe, but other forms of sample sheath are equally suitable. The sample sheath 12 has a filter 14 positioned at the opening of its end 12a which is situated in the duct 10. The sample sheath 12 extends to a predetermined depth into the duct 10 to ensure representative sampling of the flue gas stream. Preferably, the sample sheath 12 extends in a direction normal to the duct 10. The orientation of the filter 14 with respect to the direction of the flue gas flow is not critical. The filter 14 may be situated at an angle to the flow so that the sample sheath 12 assists in the separation of fly ash and other particulates in the flue gas. The other end 12b of the sample sheath (12) is secured by flanges 12c, 12d or any suitable fastening means like a threaded connection to hold the sample sheath 12 in position in the duct 10.

Inside the sample sheath 12 there are two sensors, for example first and second thermocouples 16, 18. The first thermocouple 16 measures the dry bulb temperature and can be connected to a display 20 and a recorder 22 by a line 17. The second thermocouple 18 has a wick 24 substantially surrounding it. The wick 24 is arranged to provide water to cause the second thermocouple 18 to register the wet bulb temperature at a steady rate. The second thermocouple 18 can also be connected to the display 20 and the recorder 22 by a line 19.

A portion of the wick 24 is immersed in a reservoir 26 which supplies the water. The wick 24 draws water from the reservoir 26 to cool the second thermocouple 18. The reservoir 26 is located within the sample sheath 12 and has a level switch 28 which regulates the level of the water to provide a continuous source to the wick 24. A supply line 30 provides the water to the reservoir 26. A solenoid valve 32 is situated within the supply line 30 and is responsive to the level switch 28 thereby controlling the amount of water supplied. Additional valves 34, 36 may be added, as shown, to the supply line 30 for optimum control of flow and pressure of the water. A filter 38 in the supply line 30 cleans the water to as to avoid contamination of the wick 24.

A blower 40 or vacuum pump provides means for drawing the flue gas into the sample sheath 12, and is connected to the sample sheath 12 by means of a pipe or conduit 42. The blower 40 draws the sample flue gas through the filter 14 into the sample sheath 12 for sampling. A tee (T) connection 44 in the pipe 42 along with a valve 46 controls the sampling rate by allowing ambient air from a source 48 into the pipe 42. The sampled gas may be returned to the duct 10 downstream of the measurement location through a pipe 50 after sampling.

Periodically, the solids that deposit on the filter 14 are removed with pulses of a high pressure fluid such as air. A line 52 which is supplied with pressurised air from a source 54 extends into the sample sheath 12 and directs the air at the filter 14 to remove fly ash and other particulates. An adjustable timer 56 controls a solenoid valve 58 in the air line 52 for regulating the pulse frequency and duration. The pulse frequency may range from 0 to 3 hours with the pulse duration lasting from 0 to 15 seconds. An additional shut-off valve 57 may be inserted upstream of the solenoid valve 58. In the above manner, the filter 14 is periodically cleaned at predetermined intervals so as to remove fly ash and other particulates deposited from the flue gas stream.

All the lines and connections to the sample sheath 12 enter at the opposite end 12b to that in the duct 10. An insulated enclosure 60 seals the opposite end 12b and prevents ingress of ambient air.

The apparatus is preferably constructed of standard stainless steel materials and fittings to prevent corrosion while facilitating repairs. Other materials may be suitable, depending upon the particular application.

The above-described apparatus finds particular utility as a result of the recent interest in emission control technology. As stated earlier, most flue gas desulphurisation systems inject an alkali-based sorbent into the duct with some type of humidification to increase the overall sulphur oxides removal while enhancing the particulate collector's performance. In order to achieve maximum sulphur oxide removal with alkali utilisation, it is necessary to operate the humidifier at a very low approach to saturation temperature. However, this increases the likelihood of system failure due to incomplete evaporation within the duct. As a result, it is necessary closely to control and monitor the amount of fluid injection which is controllable by a measurement of the degree of humidification of the treated flue gas.

Advantageously, a computer (not shown) may be connected to the first and second thermocouples 16, 18, which can then be used to control the flue gas humidification or slurry injection system.

The apparatus may also find utility in industries employing spray drying to concentrate or create a product such as in food processing or domestic products.

Various modifications of the above-described apparatus are possible. Examples of such modifications would be to include different level switches, more elaborate filter systems, a reservoir permitting horizontal installation, and/or a microprocessor to calculate and display humidity.

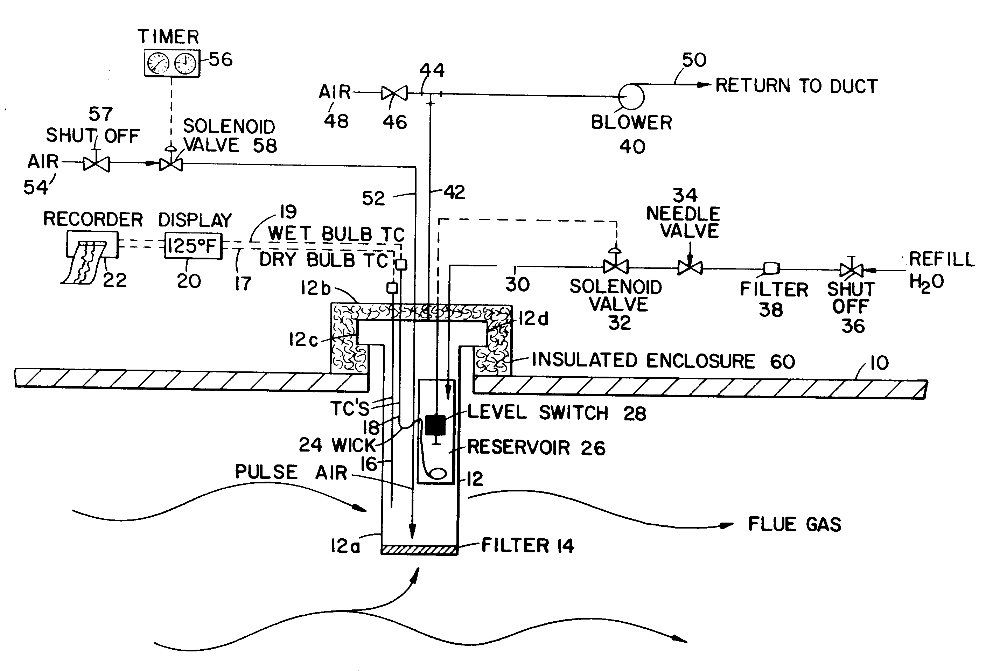

## Claims

1. Apparatus for measuring the wet and dry bulb temperatures of a gas stream flowing in a duct (10), the apparatus comprising:
a first sensor (16) for measuring the dry bulb temperature of the gas stream;
a second sensor (18) for measuring the wet blub temperature of the gas stream;
a wick (24) surrounding the second sensor (18) with the wick (24) being arranged to absorb an evaporative coolant fluid for the second sensor (18);
means (26) for supplying the evaporative coolant fluid to the wick (24);
means (28, 32) for regulating the amount of evaporative coolant fluid in the supplying means (26);
characterised in that:
a sample sheath (12) extends into the gas duct (10), the sample sheath (12) having a filter (14) at one end (12a) within the gas duct (10), the first and second sensors (16, 18) and the wick (24) being located within the sample sheath (12);
means (40) is provided for drawing the gas into the sample sheath (12);
the supplying means includes a reservoir (26) within the sample sheath (12), the reservoir (26) being connected to a fluid supply line (30); and
the regulating means includes a level switch (28) for activating a valve (32) on the evaporative coolant fluid supply line (30).

2. Apparatus according to claim 1, wherein the drawing means includes a blower (40) with a valve arrangement (46) for sampling the gas and returning the sample to the duct (10) after sampling.

3. Apparatus according to claim 1 or claim 2, comprising means (52, 54) for cleaning the filter (14) of the sample sheath (12).

4. Apparatus according to claim 3, wherein the cleaning means includes a source (52, 54) of fluid under high pressure directed at the filter (14), the fluid source (52, 54) being in communication with a timer (56) for regulating frequency and duration of the high pressure fluid.

5. Apparatus according to any one of the preceding claims, comprising a filter (38) connected in the fluid supply line (30) for cleaning the fluid upstream of the reservoir (26).

6. Apparatus according to any one of the preceding claims, comprising means (20) for displaying signals from the first and second sensors (16, 18).

7. A method of measuring the wet and dry bulb temperatures of a gas stream in a gas duct (10), the method comprising the steps of:
providing first and second sensors (16, 18) for measuring the dry and wet bulb temperatures respectively;
surrounding the second sensor (18) with a wick (24) operable to absorb an evaporative coolant fluid;
supplying evaporative coolant fluid to the wick (24); and
regulating the amount of the evaporative coolant fluid supplied to the wick (24);
characterised by the steps of:
situating a sample sheath (12) in the gas duct (10) with the sample sheath (12) having a filter (14) inside the gas duct (10), the first and second sensors (16, 18) and the wick (24) being located within the sample sheath (12); and
drawing the gas into the sample sheath (12) through the filter (14) thereby sampling the gas stream;
wherein the evaporative coolant fluid is supplied to the wick (24) from a reservoir (26) within the sample sheath (12) which reservoir is connected to a flow regulated fluid supply line (30), and wherein the regulating is carried out by a level switch which activates a valve on the evaporative coolant supply line.

8. A method according to claim 7, comprising the step of cleaning the filter (14) in the sample sheath (12) at predetermined intervals with a high-pressure fluid.

## Patentansprüche

1. Vorrichtung zum Messen der nassen und trockenen Fühlertemperaturen eines Gas stromes der durch eine Leitung (10) strömt, wobei die Vorrichtung aufweist:
einen ersten Sensor (16) zum Messen der Trockenfühlertemperatur des Gasstromes,
einen zweiten Sensor (18) zum Messen der Naßfühlertemperatur des Gasstromes,
einen Docht (24), welcher den zweiten Sensor (18) umgibt, wobei der Docht (24) so angeordnet ist, daß er ein verdampfungsfähiges Kühlfluid für den zweiten Sensor (18) absorbiert,
Einrichtung (26) für die Zufuhr des verdampfungsfähigen Kühlfluids zu dem Docht (24),
Einrichtungen (28, 32) zum Einstellen der Menge des verdampfungsfähigen Kühlfluids in der Zufuhreinrichtung (26),
**dadurch gekennzeichnet**, daß
eine Probenhülse (12) sich in die Gasleitung (10) erstreckt, wobei die Probenhülse (12) einen Filter (14) an einem Ende (12a) in der Gasleitung (10) hat, die ersten und zweiten Sensoren (16, 18) und der Docht (24) in der Probenhülse (12) angeordnet sind,
eine Einrichtung (40) vorgesehen ist, um das Gas in die Probenhülse (12) hineinzuziehen,
die Zufuhreinrichtungen ein Vorratsgefäß (26) innerhalb der Probenhülse (12) aufweisen, wobei das Vorratsgefäß (26) mit einer Fluidzufuhrleitung (30) verbunden ist, und
daß die Einstelleinrichtungen einen Niveauschalter (28) aufweisen, um ein Ventil (32) in der Zufuhrleitung (30) für das verdampfungsfähige Kühlfluid zu aktivieren.

2. Vorrichtung nach Anspruch 1, wobei die Einzugeinrichtung ein Gebläse (40) mit einer Ventilanordnung (46) aufweist, um eine Gasprobe zu nehmen und die Probe nach der Probennahme in die Leitung (10) zurückzuführen.

3. Vorrichtung nach Anspruch 1 oder 2, **dadurch gekennzeichnet**, daß sie Einrichtungen (52, 54) zum Reinigen des Filters (14) der Probenhülse (12) aufweist.

4. Vorrichtung nach Anspruch 3, wobei die Reinigungseinrichtungen eine unter hohem Druck stehende Quelle (52, 54) eines Fluids aufweisen, welche auf den Filter (14) gerichtet ist, wobei die Fluidquelle (52, 54) mit einem Zeitgeber (56) in Verbindung steht, um die Häufigkeit und Dauer für das Hochdruckfluid einzustellen.

5. Vorrichtung nach einem der vorstehenden Ansprüche, **dadurch gekennzeichnet,** daß ein Filter (38) in der Fluidzufuhrleitung (30) liegt, für die Reinigung des Fluids stromaufwärts von dem Vorratsgefäß (26).

6. Vorrichtung nach einem der vorstehenden Ansprüche mit einer Einrichtung (20) für die Anzeige von Signalen von den ersten und zweiten Sensoren (16, 18).

7. Verfahren zum Messen der Naß- und Trockenfühlertemperaturen eines Gasstromes in einer Gasleitung (10), wobei das Verfahren die Schritte aufweist:
Bereitstellen erster und zweiter Sensoren (16, 18) für die Messung der Naß-bzw. Trockenfühlertemperaturen,
Umgeben des zweiten Sensors (18) mit einem Docht (24), der so betreibbar ist, daß er ein verdampfendes Kühlfluid absorbiert,
Zuführen des verdampfenden Kühlmittelfluids zu dem Docht (24) und
Einstellen der Menge des verdampfenden Kühlmittelfluids, welches dem Docht (24) zugeführt wird,
gekennzeichnet durch die Schritte:
Anordnen einer Probenhülse (12) in der Gasleitung (10), wobei die Probenhülse (12) einen Filter (14) in der Gasleitung (10) hat, die ersten und zweiten Sensoren (16, 18) und der Docht (24) innerhalb der Probenhülse (12) angeordnet sind, und
Einziehen des Gases in die Probenhülse (12) durch den Filter (14), um so eine Probe aus dem Gasstrom zu entnehmen,
wobei das verdampfende Kühlfluid dem Docht (24) von einem Vorratsgefäß (26) in der Probenhülse (12) zugeführt wird und wobei das Vorratsgefäß mit einer strömungsgeregelten Fluidzufuhrleitung (30) verbunden ist, und wobei die Regelung durch einen Niveauschalter erfolgt, welcher ein Ventil in der Zufuhrleitung für das verdampfende Kühlmittel aktiviert.

8. Verfahren nach Anspruch 7, **dadurch gekennzeichnet**, daß der Filter (14) in der Probenhülse (12) in vorbestimmten Zeitabständen mit einem Hochdruckfluid gereinigt wird.

## Revendications

1. Appareil pour mesurer les températures de bulbes humide et sec d'un flux de gaz s'écoulant dans un conduit 10, l'appareil comprenant;
un premier capteur (16) pour mesurer la température de bulbe sec du flux de gaz;
un second capteur (18) pour mesurer la température de bulbe humide du flux de gaz;
une mèche (24) entourant le second capteur (18) avec la mèche (24) agencée pour absorber un fluide de refroidissement à évaporation pour le second capteur (18);
le moyen (26) pour alimenter la mèche (24) en fluide de refroidissement à évaporation;
le moyen (28, 32) pour réguler la quantité de fluide de refroidissement à évaporation dans le moyen d'alimentation (26);
caractérisé en ce que:
une gaine de prélèvement (12) s'étend dans le conduit de gaz (10), la gaine de prélèvement (12) ayant un filtre (14) à une extrémité (12a) à l'intérieur du conduit de gaz (10), les premier et second capteurs (16, 18) et la mèche (24) étant placés à l'intérieur de la gaine de prélèvement (12);
le moyen d'alimentation inclut un réservoir 26 à l'intérieur de la gaine de prélèvement (12), le réservoir (26) étant raccordé à la ligne d'alimentation en fluide (30); et
le moyen de régulation inclut un interrupteur (28) pour actionner une vanne (32) dans la ligne d'alimentation en fluide de refroidissement à évaporation (30).

2. Appareil selon la revendication 1, où le moyen d'aspiration inclut un appareil soufflant (40) avec une disposition de vanne (46) pour prélever le gaz et renvoyer le prélèvement au conduit (10) après prélèvement.

3. Appareil selon la revendication 1 ou la revendication 2, comprenant le moyen (52, 54) pour nettoyer le filtre (14) de la gaine de prélèvement (12).

4. Appareil selon la revendication 3, où le moyen de nettoyage inclut une source (52, 54) de fluide sous haute pression dirigé vers le filtre (14), la source de fluide (52, 54) étant en communication avec un cadenceur (56) pour réguler la fréquence et la durée du fluide sous haute pression.

5. Appareil selon une quelconque des revendications précédentes, comprenant un filtre (38) raccordé dans la ligne d'alimentation en fluide (30) pour nettoyer le fluide en aval du réservoir (26).

6. Appareil selon une quelconque des revendications précédentes, comprenant le moyen (20) pour afficher les signaux provenant des premier et second capteurs (16, 18).

7. Procédé de mesure des températures de bulbes humide et sec d'un flux de gaz dans un conduit de gaz (10), le procédé comprenant les étapes:
de fourniture des premier et second capteurs (18) pour mesurer les températures de bulbes humide et sec respectivement;
d'entourer le second capteur (18) avec une mèche (24) qui a pour objet d'absorber un fluide de refroidissement à évaporation;
d'alimentation de la mèche (24) en fluide de refroidissement à évaporation; et
de régulation de la quantité de fluide de refroidissement à évaporation alimentant la mèche (24);
caractérisé par les étapes:
de placer une gaine de prélèvement (12) dans un conduit de gaz (10) avec la gaine de prélèvement (12) ayant un filtre (14) à l'intérieur du conduit de gaz (10), les premier et second capteurs (16, 18) et la mèche (24) étant placés à l'intérieur de la gaine de prélèvement (12); et
d'aspirer le gaz dans la gaine de prélèvement (12) à travers le filtre (14) prélevant de ce fait le flux de gaz;
où le fluide de refroidissement à évaporation alimente la mèche (24) à partir d'un réservoir (26) à l'intérieur de la gaine de prélèvement (12) lequel réservoir est raccordé à une ligne d'alimentation (30) de fluide régulée en flux, où la régulation est réalisée par un interrupteur à levier qui actionne une vanne dans la ligne d'alimentation de fluide de refroidissement à évaporation.

8. Procédé selon la revendication 7, comprenant l'étape de nettoyage du filtre (14) dans la gaine de prélèvement (12) à des intervalles prédéterminés avec un fluide sous haute pression.
